Europäisches Patentamt

European Patent Office

Office européen des brevets

(11) Veröffentlichungsnummer: **0 281 918**
**A2**

(12) **EUROPÄISCHE PATENTANMELDUNG**

(21) Anmeldenummer: 88103158.7

(22) Anmeldetag: 02.03.88

(51) Int. Cl.⁴: **A01N 25/10**

(30) Priorität: 11.03.87 DE 3707692
14.03.87 DE 3708297

(43) Veröffentlichungstag der Anmeldung:
14.09.88 Patentblatt 88/37

(84) Benannte Vertragsstaaten:
**AT BE CH DE ES FR GB GR IT LI NL SE**

(71) Anmelder: **BASF Aktiengesellschaft**
**Carl-Bosch-Strasse 38**
**D-6700 Ludwigshafen(DE)**

(72) Erfinder: **Klimesch, Roger, Dr.**
**Georg-Froeba-Strasse 43**
**D-6146 Alsbach-Haehnlein 2(DE)**
Erfinder: **Parg, Adolf, Dr.**
**Paray-le-Monial-Strasse 8**
**D-6702 Bad Duerkheim(DE)**
Erfinder: **Sanner, Axel, Dr.**
**Lorscher Ring 2c**
**D-6710 Frankenthal(DE)**
Erfinder: **Angerer, Winfried, Dr.**
**Schwarzwaldstrasse 69**
**D-6800 Mannheim 1(DE)**
Erfinder: **Theobald, Hans, Dr.**
**Queichstrasse 6**
**D-6703 Limburgerhof(DE)**
Erfinder: **Becker, Rainer, Dr.**
**Im Haseneck 22**
**D-6702 Bad Duerkheim(DE)**
Erfinder: **Hofmeister, Peter, Dr.**
**Bernard-Humblot-Strasse 12**
**D-6730 Neustadt(DE)**
Erfinder: **Kuenast, Christoph, Dr.**
**Salierstrasse 2**
**D-6701 Otterstadt(DE)**
Erfinder: **Wolf, Bernd, Dr.**
**Eichenstrasse 11**
**D-6704 Mutterstadt(DE)**

(54) **Wirkstoff enthaltendes Mittel für den Pflanzenschutz.**

㊼ Wirkstoff enthaltendes Mittel für den Pflanzenschutz auf der Grundlage eines polymeren Trägers mit einem daran adsorbierten, darin gelösten oder sonst verbundenen Wirkstoff, der als polymeren Träger ein makroporöses vernetztes, vorzugsweise Styrol enthaltendes Polymer mit einer solchen Teilchengröße enthält, daß es durch ein übliches Gerät zum Ausbringen von Pflanzenschutzmitteln verteilt werden kann, wobei der Wirkstoff durch Aufsaugen in den Träger aufgenommen ist.

EP 0 281 918 A2

## Wirkstoff enthaltendes Mittel für den Pflanzenschutz

Die Erfindung betrifft Zubereitungen von Pflanzenschutzmitteln mit verzögerter Wirkstoffabgabe (sog. controlled-release-Formulierungen).

Die Anwendung von Pflanzenschutzmitteln in Form einer controlled-release-Formulierung besitzt gegenüber den konventionellen Formulierungen wie Emulsionskonzentrat, Suspensionskonzentrat oder Wettable Powder viele Vorteile:

- Da nur geringe Wirkstoffverluste auftreten, kann die Anzahl der Anwendungen vermindert werden.

- Controlled-release-Formulierungen verhindern bei der Bodenapplikation das Auswaschen des Wirkstoffs in das Grundwasser.

- Durch die Reduzierung der Aufwandmengen lassen sich eventuelle phytotoxische Nebenwirkungen von Wirkstoffen deutlich verringern.

- Toxische Verbindungen können in der controlled-release-Zubereitung sicherer gehandhabt werden, da die akute Anwendergefährdung deutlich herabgesetzt wird.

- Leicht flüchtigen oder leicht zersetzlichen (z.B. UV-instabilen Pyrethroiden) Wirkstoffen, etwa aus dem Naturstoffbereich, kann eine controlled-release-Formulierung deutlich günstigere Dauerwirkung verleihen.

Bekannt sind folgende Herstellungsverfahren für controlled-release-Formulierungen:

Die einfachste und bestbekannte Methode ist die Verwendung von Granulaten mit einer äußeren Polymerhülle. Hierzu wird zunächst der Wirkstoff auf einen festen Träger, der eine poröse Struktur besitzt, aufgezogen. Durch Aufsprühen eines Polymers auf das Granulat wird eine Schicht erzeugt, die mit Hilfe der Eigenschaften des Polymers die Freisetzung des Wirkstoffs steuert. Diese Art der controlled-release-Formulierungen ist in ihrer Herstellung jedoch meist sehr aufwendig, da mehrere Produktionsschritte, zum Teil unter Verwendung von Lösemitteln, durchlaufen werden müssen. Eine konstante Freisetzungsrate wird zudem nur dann erreicht, wenn ein gleichmäßiger und lückenloser Überzug jedes Granulatkorns vorliegt. Außerdem neigen die Granulate bei manchen für den Aufbau der Hüllschicht verwendeten Polymeren bei der Lagerung zu Verklumpungen. Ferner ist die praktische Anwendung auf den Einsatz als Streugranulat begrenzt. Deshalb können nur Wirkstoffe, die für eine Bodenbehandlung geeignet sind, eingesetzt werden.

Eine andere Möglichkeit, Wirkstoffe in controlled-release-Formulierungen zu verarbeiten, bieten die sogenannten monolithischen Systeme. Hierbei werden die Wirkstoffe in Polymermatrices homogen eingearbeitet. Je nach den chemischen und physikalischen Eigenschaften des Polymeren und des Wirkstoffs geschieht dies durch einfaches Lösen oder durch Suspendierung. Um die Verarbeitung zu Formkörpern zu ermöglichen, müssen die Wirkstoffgehalte in den Polymermatrices jedoch gering gehalten werden. Als Formkörper eignen sich Granulate, Fasern oder Folien. Aufgrund des hohen Polymeranteils in diesen controlled-release-Formulierungen ist der Einsatz oft auf solche Anwendungen beschränkt, bei denen eine vollständige Entsorgung des polymeren Trägers möglich ist. Auch bei diesem Formulierungstyp kann die Lagerfähigkeit mangelhaft sein, da die Wirkstoffe - z.B. bei hohen Lagertemperaturen - ausblühen und somit eine Verklebung verursachen.

Dieser Nachteil läßt sich vermeiden, wenn der Wirkstoff chemisch mit funktionellen Gruppen des Matrixsystems verknüpft wird. Hierzu eignen sich jedoch nur solche Wirkstoffe, die selbst über eine entsprechende reaktive Gruppe verfügen. Diese Voraussetzung beschränkt die Anwendungsbreite für diese Formulierungsart stark ein. Ein weiterer Nachteil liegt in der relativ langsamen Freisetzung des Wirkstoffs, deren Ursache in der energetisch aufwendigen Bindungslösung der chemischen Bindung zu suchen ist. Solche Systeme eignen sich nur für Anwendungen, bei denen eine lange Dauerwirkung gewünscht wird.

Ein weiteres Verfahren, controlled-release-Formulierungen von Wirkstoffen herzustellen, ist die Mikroverkapselung. Hierbei wird der Wirkstoff als Kernmaterial mit einer externen Polymerhülle umgeben, die wiederum eine konstante Freisetzungsrate ermöglicht. Die Mikrokapseln lassen sich in Form einer wäßrigen Kapselsuspension formulieren und können auf diese Weise vorteilhaft mit konventionellen Spritzgeräten ausgebracht werden.

Die Mikroverkapselung hat jedoch folgende Nachteile:

- Erfahrungsgemäß lassen sich aus physikalischen oder chemischen Gründen nur wenige Wirkstoffe verkapseln.

- Die Mikroverkapselung ist mit einem relativ hohen technischen Aufwand verbunden, der entsprechende Kosten verursacht.

- Bei der Herstellung der Mikrokapseln muß eine vollständige Verkapselung des Wirkstoffs erreicht werden. Zudem müssen die Kapseln mechanisch stabil und lagerfähig sein.

- Die Herstellung einer homogenen Kapselsuspension in wäßrigem Medium wird durch starke Agglomeration der Mikrokapseln bzw. Sedimentation oder Aufrahmung erschwert.

Es war daher Aufgabe der Erfindung, Formulierungen für Pflanzenschutz-Wirkstoffe anzugeben, die mit gebräuchlichen Spritzgeräten ausgebracht werden können und die Wirkstoffe in dem gewünschten Maße allmählich abgeben. Es wurde gefunden, daß gewisse poröse organische polymere Träger eine Vielzahl von Wirkstoffen unter Erhaltung von deren Aktivität aufzunehmen vermögen und langsam und gleichmäßig wieder abgeben, ohne daß der Wirkstoff bei längerer Lagerung ausblüht. Diese Trägermaterialien können mit einem Teilchendurchmesser von unter 300 μm hergestellt werden und daher mit üblichen Pflanzenschutzspritzen ausgebracht werden; sie können 100 % oder mehr ihres eigenen Gewichtes an Pflanzenschutzmittel aufnehmen und in Zeiträumen von 2 Wochen bis zu 2 Jahren, jedenfalls innerhalb von 4 Wochen bis 6 Monaten wieder gleichmäßig abgeben.

Das erfindungsgemäße Trägermaterial ist ein makroporöses vernetztes Styrol-bzw. Divinylbenzolpolymer, das an sich bekannt ist und beispielsweise beschrieben wird von Brutskus et al. in Coll. J. USSR, 34, 438 - 442 (1972) oder in der GB-PS 849 122.

Unmittelbarer Erfindungsgegenstand ist ein Wirkstoff enthaltendes Mittel für den Pflanzenschutz auf der Grundlage eines polymeren Trägers mit einem daran adsorbierten, darin gelösten oder sonst verbundenen Wirkstoff, das als polymeren Träger ein makroporöses vernetztes Polystyrol bzw. Poly-divinylbenzol mit einer solchen Teilchengröße enthält, daß es durch ein übliches Gerät zum Ausbringen von Pflanzenschutzmitteln verteilt werden kann, wobei der Wirkstoff durch Aufsaugen in den Träger aufgenommen ist.

In einem solchen Mittel enthält der polymere Träger
  a) bis 100 Gew.% Divinylbenzol
  b) bis 95 Gew.-% Styrol, das ein-oder mehrfach $C_{1-4}$-alkylsubstituiert sein kann,
  c) bis 20 Gew.-% mit Styrol und Divinylbenzol copolymerisierbarer Monomerer.

Entsprechende Polymerisate, die durch radikalische Polymerisation hergestellt werden, enthalten einpolymerisiert vorzugsweise 5 bis 100, insbesondere 5 bis 25 Gew.-% Divinylbenzol, bis 95, vorzugsweise 75 bis 95 Gew.-% Styrol, das in α-Stellung zum Kern oder am Kern auch ein-bzw. ein-oder mehrfach $C_{1-4}$-alkylsubstituiert sein kann sowie bis 20, vorzugsweise bis 10 Gew.-% mit Divinylbenzol und Styrol copolymerisierbare Monomere wie beispielsweise Alkylester oder Hydroxyalkylester der Acryl-oder Methacrylsäure oder anders substituierte Styrole. Die Einarbeitung von wasserlöslichen Monomeren wie z.B. Acrylsäure, Methacrylsäure oder Vinylimidazol in kleinen Mengen (bis 10 Gew.-%) ist ebenfalls möglich. Die besonders bevorzugten Polymerisate bestehen aus 10 bis 25 Gew.-% technischem Divinylbenzol (enthält ca. 50 % Divinylbenzol, Rest überwiegend Ethylstyrol, daneben u.a. auch geringe Mengen Trivinylbenzol) und 75 bis 90 Gew.-% Styrol.

Die Polymerisation des Monomeren(gemisches) wird in Form einer Suspensionspolymerisation mit Wasser als äußerer Phase durchgeführt, wobei ein Teilchendurchmesser von 80 bis 300 μm, bevorzugt 100 bis 200 μm, angestrebt wird. Dies wird z.B. durch Verwendung eines Impellerrührers erreicht. Zur Erzeugung der Makroporosität des Polymerisats wird ein Porenbildner verwendet. Als Porenbildner eignet sich eine die Polymerisation nicht störende, mit Wasser nicht mischbare, das Monomere lösende, aber das Polymere höchstens schwach quellende Flüssigkeit; geeignet sind beispielsweise Alkane mit 7 bis 12 C-Atomen, bevorzugt n-Octan oder Benzine mit einem Siedepunkt von mindestens 100°C. Die Menge an Porenbildner beträgt z.B. 50 bis 400 Gew.-%, bezogen auf die Monomeren. Die obere Grenze der Porenbildner-Menge ergibt sich aus den mechanischen Eigenschaften des Polymerisats und ist vom jeweiligen Porenbildner abhängig.

Die erhaltene Polymersuspension wird mit Wasser gewaschen und den üblichen Aufarbeitungsmaßnahmen unterworfen; zuletzt wird der Porenbildner und noch anhaftendes Wasser nach der Polymerisation durch Trocknen der Polymerisate im Vakuum bei 50°C entfernt. Die getrockneten Polymerisate werden zweckmäßig gut verschlossen aufbewahrt, damit sie weder Wasser noch andere Stoffe aus der Umgebung aufnehmen können.

Als Wirkstoffe im Sinne der Erfindung können grundsätzlich Verbindungen oder Mischungen von Verbindungen beliebiger Wirkungsrichtung verwendet werden.

Beispiele für Insektizide sind etwa Phosphorsäureester, Carbaminsäureester, halogenierte Kohlenwasserstoffe oder Pyrethroide.

Beispiele für Herbizide sind etwa Phenoxyfettsäuren, Diphenylether, Phenol-, Anilin-oder Harnstoffderivate, Carbaminsäureester, Triazinverbindungen, Verbindungen des Cyclohexenons oder Pyridazons.

Beispiele für Fungizide sind etwa metallhaltige, schwefelhaltige oder sonstige anorganische oder organische Verbindungen wie Dithiocarbamate, Disulfide, Nitroverbindungen, heterocyclische Substanzen, halogenierte Verbindungen.

Die Erfindung kann ferner mit Vorteil angewendet werden zur Formulierung bzw. Fixierung von Wirkstoffen im weiteren Sinne, z.B. Pheromonen, Repellents, Synergisten, Holzschutzmitteln, Konservierungsmitteln, Wachstumsregulatoren, Rodentiziden und ähnlichen, im Bereich der Landwirtschaft anwendbaren Mitteln.

Zur Aufnahme von Pflanzenschutzwirkstoffen oder -mischungen werden diese, wenn es sich um flüssige Wirkstoffe handelt, eventuell verdünnt, zusammen mit den erfindungsgemäßen polymeren Trägern im geschlossenen Gefäß ca. 0,5 - 2 Stunden gut durchgemischt. Sind die Wirkstoffe bei Raumtemperatur fest oder pastös, so werden sie in geeigneten organischen Mitteln gelöst, als Lösung mit den Trägern vermischt und wie oben beschrieben weiterbehandelt. Diese Lösemittel können im Träger verbleiben oder auch beispielsweise durch Trocknung wieder aus diesem entfernt werden.

Der besondere Vorteil dieser Formulierungen ist, daß sie aufgrund ihrer Feinteiligkeit in Form eines Spritzpulvers (wettable powder) formuliert werden können. Hierdurch ergeben sich für die Praxis folgende Anwendungsvorteile:

- Die langsam Wirkstoffe freisetzenden Formulierungen lassen sich in dieser Aufbereitungsform mit konventionellen Spritzgeräten ausbringen.

- Durch die konventionelle Spritzung sind Kombinationsanwendungen mit anderen handelsüblichen Wirkstoff-und Düngerformulierungen möglich.

Zur Herstellung eines Spritzpulvers mit den erfindungsgemäßen Formulierungen werden diese zweckmäßig zusammen mit Netz-, Dispergier-und Haftmitteln, eventuell auch Füllstoffen, homogenisiert.

Als Netz-, Dispergier-und Haftmittel kommen oberflächenaktive Stoffe wie Alkali-, Erdalkali-, Ammoniumsalze der Ligninsulfonsäuren, Naphthalinsulfonsäuren, Phenolsulfonsäuren, Alkylarylsulfonsäuren, Alkylsulfonate, Alkylsulfate, Alkali-und Erdalkalisalze der Dibutylnaphtalinsäure, Kondensationsprodukte von sulfonierten Alkyl-Naphthalinsulfonsäuren mit Phenol, Formaldehyd und Harnstoff in Betracht.

Als Füllstoffe eignen sich Kaoline, Kieselsäuren, Kreiden, Bentonite, Silikagele, Tone, Calcium-und Magnesiumsulfat, Talkum, Magnesiumoxid, Kalk sowie alle festen, nichtwasserlöslichen Materialien.

In den nachstehenden Beispielen sind Versuche zur Wirkstoffverdunstung beschrieben; dabei wurden die mit Wirkstoff versehenen Träger auf Filterpapierstreifen aufgebracht und mehrere Wochen in gut durchlüfteten Räumen aufgehängt. Im Abstand von je 7 Tagen wurden Proben von den Streifen entnommen und auf Restwirkstoffgehalt untersucht.

Herstellbeispiele für den erfindungsgemäß verwendeten polymeren Träger

Beispiel A

Eine Emulsion, bestehend aus 150 g Styrol, 50 g technischem Divinylbenzol (etwa 50 % Ethylvinylbenzol enthaltend), 200 g n-Octan, 1 g Laurylperoxid, 1 g Polyvinylpyrrolidon vom K-Wert 90 als Suspensionshilfsmittel und 1300 ml Wasser, wird unter Stickstoff mit einer Rührerdrehzahl von 400 Upm 8 h bei 85°C gerührt. Das entstandene makroporöse perlförmige Polymerisat mit einem Perldurchmesser von 100 bis 200 µm wird mit Wasser gewaschen und bei 50°C i. V. (<30 mbar) getrocknet. Man erhält 195,0 g (97,5 Gew.%) der rechnerisch möglichen Menge.

Beispiel B

Unter Verwendung von 180 g Styrol, 20 g technischem Divinylbenzol (etwa 50 % Ethylvinylbenzol enthaltend), 200 g n-Octan, 1 g Laurylperoxid, 1300 ml Wasser sowie 2 g Polyvinylpyrrolidon vom K-Wert 90 als Suspensionshilfsmittel wird unter Einleiten von Stickstoff ein Perlpolymerisat hergestellt, wobei 8 h ei 85°C und 400 Rührerumdrehungen pro Stunde polymerisiert wird. Das entstandene perlförmige Polymerisat mit einem Perldurchmesser von 100 bis 300 μm wird mit Wasser gewaschen und bei 50°C i. V. getrocknet. Ausbeute: 190,0 g (95 %).

Beispiel C

Eine Emulsion, bestehend aus 160 g Styrol, 20 g technischem Divinylbenzol (etwa 50 % Ethylvinylbenzol enthaltend), 20 g Methacrylsäure, 200 g n-Octan, 1 g Laurylperoxid, 3 g Polvinylpyrrolidon vom K-Wert 90 als Suspensionshilfsmittel und 1300 ml Wasser, wird unter Stickstoff mit einer Rührerdrehzahl von 400 Upm 8 h bei 90°C gerührt. Das entstandene perlförmige Polymerisat mit einem Perldurchmesser von 100 bis 200 μm wird mit Wasser gewaschen und bei 50°C i. V. getrocknet. Ausbeute: 196,0 g (98 %).

Beispiel D

Eine Emulsion, bestehend aus 135 g Styrol, 45 g technischem Divinylbenzol (etwa 50 % Ethylvinylbenzol enthaltend), 20 g Dimethylaminoethylmethacrylat, 200 g n-Octan, 1 g Laurylperoxid, 1 g Polvinylpyrrolidon vom K-Wert 90 als Suspensionshilfsmittel und 1300 ml Wasser, wird unter Stickstoff mit einer Rührerdrehzahl von 450 Upm 8 h bei 90°C gerührt. Das entstandene perlförmige Polymerisat mit einem Perldurchmesser von 100 bis 250 μm wird mit Wasser gewaschen und bei 50°C i. V. (<30 mbar) getrocknet. Ausbeute: 192,0 g (96 %).

Beispiel E

Eine Emulsion, bestehend aus 160 g Styrol, 20 g technischem Divinylbenzol (etwa 50 % Ethylvinylbenzol enthaltend), 20 g Hydroxyethylmethacrylat, 200 g n-Octan, 1 g Laurylperoxid, 1 g Polvinylpyrrolidon vom K-Wert 90 als Suspensionshilfsmittel und 1300 ml Wasser, wird unter Stickstoff mit einer Rührerdrehzahl von 400 Upm 8 h bei 90°C gerührt. Das entstandene perlförmige Polymerisat mit einem Perldurchmesser von 100 bis 300 μm wird mit Wasser gewaschen und bei 50°C i. V. getrocknet. Ausbeute: 192,0 g (96 %).

Herstellbeispiele für die erfindungsgemäßen Mittel

Beispiel 1

100 g eines Polymerisats entsprechend dem Beispiel A und 100 g des Herbizids Metolachlor werden zusammen gegeben und in einem gut verschlossenen Gefäß 1/2 h intensiv durchmischt. Die so erhaltenen herbizidhaltigen Teilchen behalten ihre ursprüngliche Größe bei, quellen nicht in Wasser, sind an der Oberfläche trocken und freifließend.

Beispiel 2

100 g eines Polymerisats entsprechend dem Beispiel B und 200 g des Fungizids Tridemorph werden zusammengegeben und in einem gut verschlossenen Gefäß 1/2 h intensiv durchmischt. Die so erhaltenen fungizidhaltigen Teilchen behalten ihre ursprüngliche Größe bei, quellen nicht in Wasser, sind an der Oberfläche trocken und freifließend.

## Beispiel 3

100 g eines Polymerisats entsprechend dem Beispiel D und 100 g des Fungizids Fenpropimorph werden zusammengegeben und in einem gut verschlossenen Gefäß 1/2 h intensiv durchmischt. Die so erhaltenen Teilchen behalten ihre ursprüngliche Größe bei, quellen nicht in Wasser, sind an der Oberfläche trocken und freifließend.

## Beispiel 4

100 g eines Polymerisats entsprechend dem Beispiel E und 100 g des Fungizids Furmecyclox werden zusammengegeben und in einem gut verschlossenen Gefäß 1/2 h intensiv durchmischt. Die so erhaltenen Teilchen behalten ihre ursprüngliche Größe bei, quellen nicht in Wasser, sind an der Oberfläche trocken und freifließend.

## Beispiel 5

100 g eines Polymerisats entsprechend dem Beispiel B und 250 g einer Lösung bestehend aus 100 g des Herbizids Bentazon und 150 g Dimethylformamid werden zusammengegeben und in einem gut verschlossenen Gefäß 1/2 h intensiv durchmischt. Diese Mischung wird zur Entfernung des Lösemittels 4 h bei 1 mbar und 40°C Badtemperatur getrocknet. Die so erhaltenen herbizidhaltigen Teilchen behalten ihre ursprüngliche Größe bei, quellen nicht in Wasser, sind an der Oberfläche trocken und freifließend.

Beispiele für erfindungsgemäß formulierte Mittel

## Beispiel 6

100 g des Wirkstoff enthaltenden Trägers gemäß Herstellbeispiel 1 werden einem Labor-Mischer, der nach dem Lödige-Prinzip (Pflugscharmischer) arbeitet, mit 75 g Natriumsalz eines Phenolsulfonsäure-Harnstoff-Formaldehyd-Kondensats (Handelsbezeichnung Wettol D 1), 75 g Wettol D 2 (Phenol-Formaldehyd-Natriumsulfit-Kondensat), 100 g Wettol NT 1 (Natriumalkylnaphthalinsulfonat) und 650 g Kreide über 30 Minuten gemischt. Das Endprodukt besitzt eine Schwebefähigkeit (gemessen nach CIPAC-MT 15 bei einer Spritzbrühenkonzentration von 0,5 % nach 30 Minuten) von ca. 75 % und nach 60 Minuten von ca. 70 %.

## Beispiel 7

200 g des Wirkstoff enthaltenden Trägers gemäß Beispiel 2 werden im Lödige-Mischer mit 100 g Wettol D 1, 75 g Wettol SSP, 150 g Wettol NT 1 und 475 g Kreide über 60 Minuten gemischt. Das Endprodukt besitzt eine Schwebefähigkeit (bei einer Spritzbrühenkonzentration von 0,25 % nach 30 Minuten) von ca. 77 % und nach 60 Minuten von ca. 72 %.

## Beispiel 8

100 g des Wirkstoff enthaltenden Trägers gemäß Beispiel 3 werden im Lödige-Mischer mit 75 g Wettol D 1, 150 g Wettol SSP, 100 g Wettol NT 1 und 575 g Kreide über 45 Minuten gemischt. Das Endprodukt besitzt eine Schwebefähigkeit (bei einer Spritzbrühenkonzentration von 0,5 % nach 30 Minuten) von ca. 73 % und nach 60 Minuten von ca. 69 %.

Beispiel 9

200 g des Wirkstoff enthaltenden Trägers gemäß Beispiel 3 werden im Lödige-Mischer mit 75 g Wettol D 1, 50 g Zewa Na (Ligninsulfonat), 75 g Wettol SSP, 100 g Wettol NT 1 und 500 g Kaolin über 60 Minuten gemischt. Das Endprodukt besitzt eine Schwebefähigkeit (bei einer Spritzbrühenkonzentration von 0,25 % nach 30 Minuten) von ca. 78 % und nach 60 Minuten von ca. 72 %.

Beispiel 10 und 11 (ein Pyrethroid enthaltende Mittel)

100 g eines der vorstehend beschriebenen Träger und 200 g einer Lösung von 100 g des Pyrethroids in 100 g Tetrahydrofuran werden 30 Minuten intensiv gemischt und dann 4 Stunden lang bei 1 mbar und 40°C der Mischung das Lösemittel wieder entzogen. Das Pyrethroid des Beispiels 10 wurde mit dem Träger des Herstellbeispiels A und das Pyrethroid des Beispiels 11 entsprechend mit dem Träger E vermischt.

Tabelle

| Polymer entsprechend Beispiel | Pyrethroid |
|---|---|
| 10     A | |
| 11     E | |

Weitere Beispiele für die Formulierung der Wirkstoffzubereitungen

Beispiel 12

100 g des Pyrethroid enthaltenden Trägers aus Beispiel 10 werden in einem Labor-Mischer, der nach dem Lödige-Prinzip (Pflugscharmischer) arbeitet, mit 75 g Natriumsalz eines Phenolsulfonsäure-Harnstoff-Formaldehyd-Kondensats (Handelsbezeichnung Wettol D 1), 75 g Wettol D 2 (Phenol-Formaldehyd-Natriumsulfit-Kondensat), 100 g Wettol NT 1 (Natriumalkylnaphthalinsulfonat) und 650 g Kreide während 30 Minuten gemischt. Das Endprodukt besitzt eine Schwebefähigkeit (gemessen nach CIPAC-MT 15 bei einer Spritzbrühenkonzentration von 0,5 % nach 30 Minuten) von ca. 79 % und nach 60 Minuten von ca. 73 %.

Beispiel 13

200 g des Pyrethroid enthaltenden Trägers aus Beispiel 11 werden im Lödige-Mischer mit 100 g Wettol D 1, 75 g Wettol SSP, 150 g Wettol NT 1 und 475 g Kreide über 60 Minuten gemischt. Das Endprodukt besitzt eine Schwebefähigkeit (bei einer Spritzbrühenkonzentration von 0,25 % nach 30 Minuten) von ca. 80 % und nach 60 Minuten von ca. 75 %.

Beispiel 14

100 g des Pyrethroid enthaltenden Trägers aus Beispiel 12 werden im Lödige-Mischer mit 75 g Wettol D 1, 150 g Wettol SSP, 100 g Wettol NT 1 und 575 g Kreide über 45 Minuten gemischt. Das Endprodukt besitzt eine Schwebefähigkeit (bei einer Spritzbrühenkonzentration von 0,5 % nach 30 Minuten) von ca. 76 % und nach 60 Minuten von ca. 72 %.

Beispiel 15

200 g des Pyrethroid enthaltenden Trägers aus Beispiel 12 werden im Lödige-Mischer mit 75 g Wettol D 1, 50 g Zewa Na (Ligninsulfonat), 75 g Wettol SSP, 100 g Wettol NT 1 und 500 g Kaolin über 60 Minuten gemischt. Das Endprodukt besitzt eine Schwebefähigkeit (bei einer Spritzbrühenkonzentration von 0,25 % nach 30 Minuten) von ca. 77 % und nach 60 Minuten von ca. 74 %.

Anwendungsbeispiel

Musca domestica - Dauerwirkung auf Glasplatten

Die Proben werden gleichmäßig auf aufgerauhte Glasplatten 15×15 cm aufgetragen. Auf die abgetrockneten Beläge bringt man je 10 Stubenfliegen unter eine Petrischale (⌀ ca. 9 cm) und boniert die Wirkung nach 4 Stunden. Der Versuch wird täglich wiederholt, bis die Wirkung abgeklungen ist. Die Lagerung der Platten erfolgt bei Raumtemperatur (ca. 22°C). Die Prüfung wird zweimal durchgeführt. Pro Platte verwendet man jeweils 1 mg Wirkstoff, einmal in der erfindungsgemäßen Formulierung, einmal - zu Vergleichszwecken - in üblicher, acetonischer Lösung.

Tabelle

| Wirkstoff nach Beispiel | verwendete Formulierung | Anzahl der Tage | Mortalität [%] |
|---|---|---|---|
| 10 | 0,1 Gew.% acetonische Lösung (nicht stabilisiert; Vergleich) | 1 | 100 |
| | | 2 | 0 |
| 10 | gemäß Beispiel 12 (stabilisiert) | 7 | 90 |
| 11 | 0,1 Gew.% acetoniche Löung (nicht stabilisiert; Vergleich) | 1 | 100 |
| | | 2 | 0 |
| 11 | gemäß Beispiel 12 (stabilisiert) | 6 | 90 |

Beispiel 16

100 g eines Polymerisats entsprechend dem Beispiel A und 100 g Z-9-Dodecenylacetat (Pheromon des einbindigen Traubenwicklers) werden zusammengegeben und in einem gut verschlossenen Gefäß 12 h intensiv durchmischt. Die so erhaltenen pheromonhaltigen Teilchen behalten ihre ursprüngliche Größe bei, quellen nicht in Wasser, sind an der Oberfläche trocken und freifließend.

Beispiel 17

100 g eines Polymerisats entsprechend dem Beispiel B und 200 g Z-9-Dodecenylacetat (Pheromon des einbindigen Traubenwicklers) werden zusammengegeben und in einem gut verschlossenen Gefäß 1/2 h intensiv durchmischt. Die so erhaltenen pheromonhaltigen Teilchen behalten ihre ursprüngliche Größe bei, quellen nicht in Wasser, sind an der Oberfläche trocken und freifließend.

Beispiel 18

100 g eines Polymerisats entsprechend dem Beispiel D und 100 g eines 1:1-Gemisches aus Z-7,Z-9-Hexadecadienylacetat und Z-7,E-9-Hexadecadienylacetat (Pheromon des rosa Baumwollkapselwurms) werden zusammen gegeben und in einem gut verschlossenen Gefäß 1/2 h intensiv durchmischt. Die so erhaltenen pheromonhaltigen Teilchen behalten ihre ursprüngliche Größe bei, quellen nicht in Wasser, sind an der Oberfläche trocken und freifließend.

Vergleich des Abdampfverhaltens von erfindungsgemäßen Zubereitungen mit Z-9-Dodecenylacetat (Z9-DDA) aus einer der Erfindung gemäßen Mittel mit dem aus der DE-OS 27 40 497 bekannten Abgabesystem.

**Tabelle: Restpheromongehalt im Träger [%]**

| Zeit [Wochen] | Beispiel 16 | Beispiel 17 | Trägerfolie nach der DE-OS 27 40 497 |
|---|---|---|---|
| 0 | 100 | 100 | 100 |
| 1 | 87 | 76 | 80 |
| 2 | 73 | 64 | 67 |
| 3 | 65 | 52 | 54 |
| 4 | 52 | 35 | 50 |
| 5 | 45 | 24 | 37 |
| 6 | 32 | 16 | 33 |
| 7 | 26 | 10 | 24 |

## Ansprüche

1. Wirkstoff enthaltendes Mittel für den Pflanzenschutz auf der Grundlage eines polymeren Trägers mit einem daran adsorbierten, darin gelösten oder sonst verbundenen Wirkstoff, dadurch gekennzeichnet, daß als polymerer Träger ein makroporöses vernetztes Polystyrol bzw. Poly-divinylbenzol mit einer solchen Teilchengröße verwendet wird, daß es durch ein übliches Gerät zum Ausbringen von Pflanzenschutzmitteln verteilt werden kann, wobei der Wirkstoff durch Aufsaugen in den Träger aufgenommen ist.

2. Mittel nach Anspruch 1, dadurch gekennzeichnet, daß der polymere Träger einpolymerisierte Einheiten folgender Monomerer enthält:

a) 5 bis 100 Gew.% Divinylbenzol,

b) bis 95 Gew.-% Styrol, das ein-oder mehrfach $C_{1-4}$-alkylsubstituiert sein kann,

c) bis 20 Gew.-% mit Styrol und Divinylbenzol copolymerisierbarer Monomerer.

3. Mittel nach Anspruch 1, dadurch gekennzeichnet, daß es aus Teilchen des makroporösen polymeren Trägers mit einem Durchmesser von kleiner 300 μm oder weniger besteht.

4. Mittel nach einem der Ansprüche 1 bis 3, dadurch erhältlich, daß der Wirkstoff bei Raumtemperatur in den makroporösen polymeren Träger aufgenommen worden ist.

5. Mittel, dadurch erhältlich, daß ein Mittel nach einem der Ansprüche 1 bis 4 zusammen mit Netzmitteln, Dispergiermitteln, Haftmitteln und ggf. Füllstoffen zu einem Spritzpulver formuliert worden ist.

6. Mittel nach einem der Ansprüche 1 bis 5, enthaltend ein Pheromon.

7. Mittel nach einem der Ansprüche 1 bis 5, enthaltend ein Pyrethrocid.

8. Mittel nach einem der Ansprüche 1 bis 5, enthaltend ein Fungizid.